# FASCICULE DE BREVET EUROPEEN

(11) **EP 0 998 418 B1**
(45) Date de publication et mention de la délivrance du brevet: **09.01.2002**
(21) Numéro de dépôt: 98939681.7
(22) Date de dépôt: 15.07.1998
(51) Int. Cl.: B65G 29/02

(54) **DISPOSITIF DE TRANSFERT CONTINU VERTICAL DE RECIPIENTS**
VORRICHTUNG ZUR KONTINUIERLICHEN ÜBERGABE VON BEHÄLTERN IN VERTIKALER RICHTUNG
DEVICE FOR CONTINUOUS VERTICAL TRANSFER OF CONTAINERS

(30) Priorité: 17.07.1997 FR 9709084
(43) Date de publication de la demande: 10.05.2000
(73) Titulaire: SIDEL Société anonyme, 76930 Octeville-sur-Mer (FR)
(72) Inventeur: MARCHAU, Bernard, F-76930 Octeville sur Mer (FR); MIE, Patrick, F-76930 Octeville sur Mer (FR); BONNEL, Christian, F-76930 Octeville sur Mer (FR)
(74) Mandataire: Gorrée, Jean-Michel
(86) Numéro de dépôt international: FR9801547
(87) Numéro de publication internationale: WO9903763

(56) Documents cités:
- EP-A- 0 129 168
- DE-A- 19 512 515

## Description

La présente invention concerne des perfectionnements apportés aux dispositifs de transfert continu de récipients - tels que bouteilles, flacons, ou préformes de récipients - et plus particulièrement elle concerne des perfectionnements apportés à un dispositif de transfert continu de récipients selon une direction sensiblement verticale selon le préambule de la revendication 1.

Dans les usines, la place disponible au sol est toujours comptée, notamment en raison du coût du terrain, tandis que la place disponible verticalement est beaucoup moins limitée. En particulier, dans les installations de traitement des récipients, depuis la fabrication desdits récipients jusqu'à leur remplissage et leur emballage pour l'expédition, le développement linéaire des divers postes de traitement et des postes de transfert est extrêmement important. Il existe donc dans ce domaine un besoin pour un dispositif de transfert continu vertical des récipients qui autorise un étagement des postes de traitement et/ou des lignes de transfert, et qui conduise ainsi à une économie de l'emprise au sol des installations.

Le document DE-A-195 12 515 décrit un dispositif qui permet de déplacer verticalement des récipients. Toutefois, l'amplitude de déplacement vertical des récipients autorisé par ce dispositif connu est limitée et la structure du dispositif est telle qu'il n'est pas possible de la modifier, dans des conditions économiques et technologiques acceptables, afin de parvenir à déplacer les récipients sur des hauteurs relativement importantes.

C'est donc un but de l'invention de proposer un dispositif de transfert continu vertical de récipients qui soit fiable en faisant appel à des solutions techniques éprouvées, qui soit peu encombrant lui-même, qui n'affecte nullement la cadence de fonctionnement de l'ensemble de l'installation et qui notamment soit apte à suivre les cadences très élevées de transfert nécessaires dans les installations modernes, et qui, finalement, soit aussi simple structurellement et aussi peu coûteux que possible.

A ces fins, l'invention propose un dispositif à étages multiples pour le transfert de récipients selon une direction sensiblement verticale, caractérisé en ce qu'il comprend :
- une multiplicité de moyens de support pour associer lesdits organes de préhension aux moyens d'entraînement, agencés pour que chaque organe de préhension puisse coulisser sensiblement verticalement relativement aux moyens d'entraînement, chaque moyen de support supportant plusieurs organes de préhension en nombre n, équidistants verticalement les uns des autres,
- ladite came fixe étant circulaire et coaxiale aux moyens d'entraînement et disposée à l'aplomb desdits moyens de support de manière que ceux-ci puissent coopérer avec elle, ladite came présentant une hauteur variable circulairement entre un niveau vertical minimum et un niveau vertical maximum de manière à générer un déplacement vertical des moyens de support lorsque les moyens d'entraînement tournent,
- n moyens d'alimentation disposés verticalement les uns au-dessus des autres et n moyens d'évacuation disposés verticalement les uns au-dessus des autres avec la même équidistance que les organes de préhension,
- et en outre (n-1) moyens de transfert intermédiaires disposés verticalement les uns au-dessus des autres et agencés pour recueillir les récipients du moyen d'évacuation d'un niveau et l'amener, par un transfert sensiblement horizontal, au moyen d'alimentation en direction d'un niveau immédiatement adjacent - supérieur ou inférieur -,
ce grâce à quoi, pour une came de hauteur donnée, il est possible de multiplier l'amplitude verticale de transfert des récipients.

En particulier, on peut concevoir alors qu'à chaque étage des moyens sélecteurs sont prévus pour prélever des récipients sur les moyens d'évacuation dudit niveau et les diriger vers une sortie correspondante ou sélectivement pour laisser les récipients être entraînés par le moyen de transfert intermédiaire vers le moyen d'alimentation suivant. Notamment, il peut être prévu que chaque moyen de transfert intermédiaire dessert une unité ou fraction d'unité de traitement de récipients, ce grâce à quoi les récipients sont déplacés à travers une succession d'appareils de traitement disposés verticalement les uns au-dessus des autres, avec une implantation au sol de surface réduite.

Dans ces conditions, il est possible de réduire l'emprise d'un appareil de traitement en le fractionnant en plusieurs sections superposées et desservies par le dispositif de l'invention, voire même plus généralement de répartir sur plusieurs niveaux l'ensemble d'une installation.

On notera également que le dispositif de l'invention est parfaitement réversible et qu'il peut autant servir à élever les récipients qu'à les descendre.

Grâce à ces dispositions, on réalise un dispositif dont le fonctionnement est fiable. Le recours à une commande de déplacement des tiges par une came est une solution d'une simplicité mécanique extrême, qui est largement mise en oeuvre dans d'autres parties de l'installation de traitement (et notamment de fabrication) des récipients et qui peut se prêter, sans modification sensible, à des vitesses de fonctionnement élevées ; un tel agencement peut donc équiper, de par son principe, des installations ayant des capacités de productions très diverses.

Avantageusement, on peut prévoir que chaque moyen de support comprend une tige de support apte à coulisser sensiblement verticalement dans un palier prévu sur la périphérie des moyens d'entraînement, cette tige de support supportant un organe de préhension, d'une part, et coopérant avec la came, d'autre part ; de préférence, chaque moyen de support est associé à des moyens de rappel pour maintenir élastiquement la tige en appui contre la came ; les moyens de rappel peuvent être un ressort ou alternativement être une contre-came coopérant avec un galet porté par la tige.

Dans un agencement qui laisse libre l'espace au-dessus des moyens d'entraînement et qui peut donc autoriser un développement vertical important du dispositif, les moyens d'entraînement sont un plateau, la came est située sous le plateau, les tiges traversent le plateau et les organes de préhension sont situés au-dessus du plateau.

Dans un mode de réalisation pratique, les récipients étant munis d'un col définissant un goulot, les organes de préhension sont alors des pinces s'étendant sensiblement radialement par rapport à l'axe des moyens d'entraînement et aptes à saisir les récipients par leur col.

Pour assurer un fonctionnement fiable, les moyens d'alimentation à l'entrée du dispositif et les moyens d'évacuation à la sortie du dispositif comprennent chacun une roue de transfert comportant un disque muni d'évidements périphériques pour supporter les récipients par leur col et les présenter un à un aux moyens de préhension ou respectivement les saisir un à un sur lesdits moyens de préhension ; en particulier, les moyens d'alimentation comprennent une vis d'alimentation associée à la roue de transfert d'alimentation pour amener à celle-ci les récipients distants d'un pas prédéterminé et/ou les moyens d'évacuation comprennent une vis sans fin d'évacuation associée à la roue de transfert d'évacuation pour recueillir les récipients sur celle-ci.

L'invention sera mieux comprise à la lecture de la description détaillée qui suit de certains modes de réalisation préférés, donnés uniquement à titre d'exemples non limitatifs. Dans cette description, on se réfère aux dessins annexés sur lesquels :
- la figure 1 est une vue schématique de dessus d'un mode de réalisation préféré d'un dispositif de transfert continu vertical de récipients ;
- la figure 2 est une vue schématique de côté du dispositif de la figure 1 ;
- la figure 3 est une vue schématique de dessus d'un exemple de mise en oeuvre du dispositif des figures 1 et 2;
- la figure 4 est une vue schématique de côté du dispositif de la figure 3 ; et
- les figures 5 et 6 sont deux schémas illustrant respectivement des extensions possibles d'agencement du dispositif conforme à l'invention.

Dans la description qui suit, on a pris plus particulièrement en considération le transfert de récipients muni d'un col définissant un goulot, et plus spécifiquement de récipients dont le col est entouré, à sa base, d'une collerette de support. De plus les récipients dessinés sur les figures sont des préformes ou ébauches moulées à partir desquelles les récipients sont fabriqués dans leur forme définitive par soufflage ou étirage-soufflage.

Toutefois, il ne s'agit là que d'exemples permettant de fixer les idées, et le dispositif de l'invention peut transférer tous les types de récipients, préformes ou récipients définitifs, vides ou remplis, à quelque stade de traitement que ce soit depuis la fabrication des préformes jusqu'à l'emballage des récipients remplis et étiquetés.

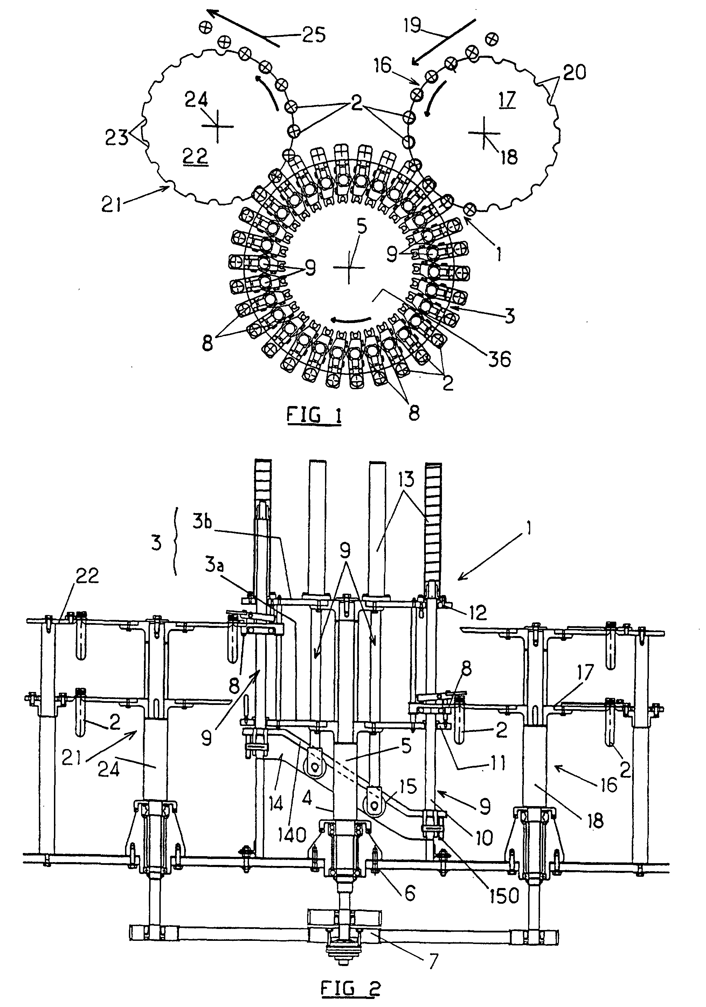

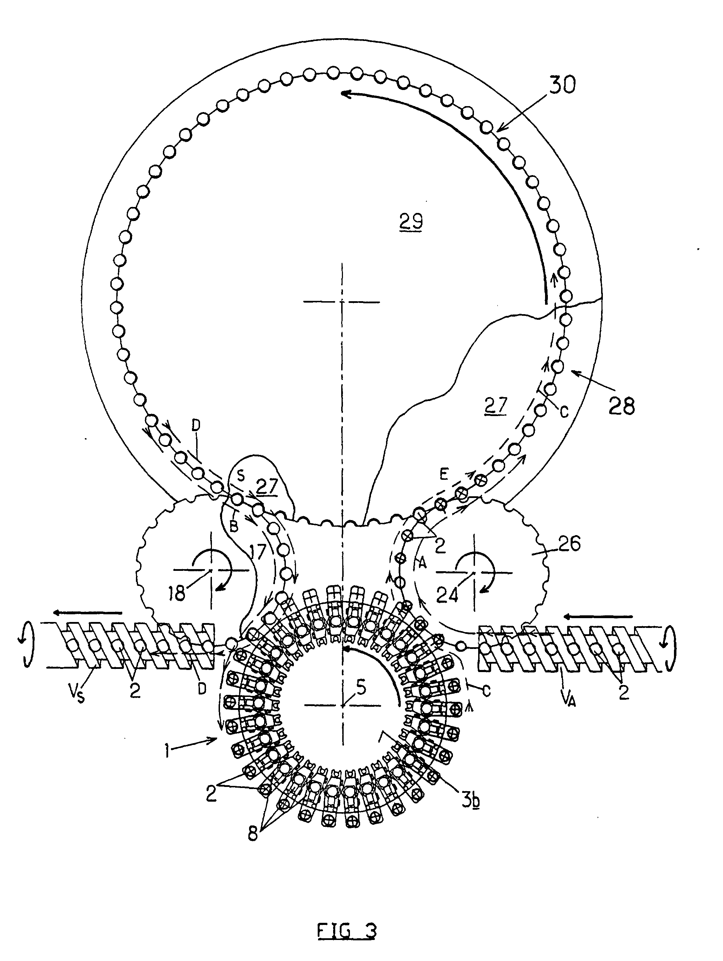

En se reportant tout d'abord aux figures 1 et 2, un dispositif de transfert continu de récipients 2 (ici des préformes) selon une direction sensiblement verticale, désigné dans son ensemble par la référence 1, comprend, dans un mode de réalisation préféré :
- des moyens d'entraînement en rotation constitués par un plateau circulaire 3, sensiblement horizontal, solidaire d'un arbre central vertical 4 tournant autour d'un axe 5 et supporté à rotation par un bâti schématisé en 6, en étant entraîné en rotation par des moyens 7 (poulie et courroie, roue dentée et chaîne, train d'engrenages,...); dans l'exemple représenté à la figure 2, le plateau 3 est double et constitué de deux éléments discoïdaux 3a et 3b superposés afin de faciliter le guidage d'organes dont question plus loin, mais un tel agencement n'est pas limitatif (carrousel d'entraînement,...) ;
- une multiplicité d'organes 8 de préhension des récipients 2 qui sont répartis sur la périphérie du plateau 3 ; dans l'exemple représenté les organes de préhension 8 sont agencés sous forme de pinces disposées sensiblement radialement ;
- une multiplicité de moyens 9 de support desdits organes de préhension 8 sur le plateau 3, chaque moyen de support 9 étant agencé pour pouvoir coulisser sensiblement verticalement relativement au plateau 3, sensiblement parallèlement à l'arbre 4 ; dans l'exemple illustré à la figure 2 de façon mieux visible, chaque moyen de support 9 est constitué par une tige de support 10 apte à coulisser sensiblement verticalement dans des paliers 11, 12 prévus respectivement dans les éléments discoïdaux inférieur 3a et supérieur 3b constituant le plateau 3 ; un manchon protecteur 13 fixé sur le dessus de l'élément discoïdal supérieur 3b coiffe l'extrémité saillante de la tige 10 et renferme au moins un ressort de rappel dont question plus loin ;
- sous l'élément discoïdal inférieur 3a du plateau 3 est disposé une came fixe circulaire 14, coaxiale au plateau 3 et disposée à l'aplomb des extrémités inférieures des tiges 10 de manière que lesdites extrémités, équipées de préférence de galets 15, puissent prendre appui sur ladite came 14 ; cette came présente une hauteur variable circulairement entre un niveau vertical minimum et un niveau vertical maximum de manière à générer un déplacement vertical des tiges 10 et donc des organes 8 de préhension lorsque le plateau 3 tourne ; le maintien en appui des tiges 10 contre la came 14 est obtenu sous l'action des ressorts de rappel précités (non visibles sur les dessins) et/ou à l'aide d'une contre-came 140 et d'un galet correspondant 150 dont question plus loin ;
- des moyens 16 d'alimentation du plateau 3 en récipients, lesdits moyens d'alimentation 16 étant agencés pour amener les récipients 2 les uns à la suite des autres aux moyens de préhension 8 équipant le plateau 3 lorsque ceux-ci défilent en étant situés à un premier niveau ; dans l'exemple plus particulièrement représenté aux figures 1 et 2, les moyens d'alimentation 16 comprennent une roue de transfert 17 mobile en rotation sur un arbre vertical 18 supporté par le bâti 6, et disposée de manière à tangenter la trajectoire circulaire des organes de préhension 8 du plateau 3 ; la roue de transfert 17 reçoit elle-même les préformes d'un dispositif d'amenée approprié (par exemple une vis sans fin de mise au pas) schématisé par la flèche 19 sur la figure 1, les récipients 2 étant reçus dans des échancrures 20 réparties sur la périphérie de la roue 17; dans cet exemple la roue 17 est située en position basse, en regard d'une zone où la came 14 possède son niveau vertical minimum ;
- et des moyens 21 d'évacuation des récipients 2 qui sont disposés pour évacuer les récipients les uns à la suite des autres hors des organes de préhension 8 du plateau 3 lorsque ceux-ci défilent en étant situés à un second niveau ; dans l'exemple représenté aux figures 1 et 2, les moyens d'évacuation 21 sont constitués de façon strictement identiques aux moyens d'alimentation 16, sous forme d'une roue de transfert 22 à encoches périphériques 23 tournant autour d'un axe vertical 24 et située en position haute, en regard d'une zone où la came 14 possède son niveau vertical maximum, les récipients 2 étant ensuite repris par un dispositif approprié, tel qu'une vis sans fin schématisée par la flèche 25.

On notera dès à présent la réversibilité de fonctionnement du dispositif qui vient d'être décrit plus spécifiquement dans un agencement de type élévateur : une rotation en sens inverse des roues de transfert 17 et 22 et une inversion de l'alimentation et de l'évacuation, ainsi qu'une rotation en sens inverse du plateau permettent de réaliser un agencement de type descenseur.

On notera également que l'amplitude du mouvement vertical n'est limitée que par la raideur de la pente de la came 14, cette raideur dépendant elle-même du diamètre de la came : il est donc possible d'envisager un déplacement vertical des préformes de toute amplitude souhaitée en choisissant de façon appropriée le diamètre de la came, autrement dit le diamètre du plateau 3. Toutefois, pour éviter d'avoir recours à un diamètre trop important (et donc éviter un dispositif trop encombrant) lorsqu'une grande amplitude de déplacement vertical est souhaitée, une solution originale, conduisant à un encombrement moindre, sera donnée plus loin.

On notera de plus que l'agencement qui vient d'être décrit et qui est représenté aux figures 1 et 2, avec la came située sous le plateau 3 et les tiges 10 animées d'un mouvement vertical au-dessus du plateau inférieur 3a, constitue un mode de réalisation préféré en raison de la simplicité de structure, de montage et d'entretien auxquelles il conduit ; en outre, il autorise, sans modification de la partie basse du dispositif, une extension verticale vers le haut pour accroître les possibilités fonctionnelles comme cela sera expliqué plus loin ; toutefois, d'autres solutions techniques peuvent être envisagées qui conduiraient aux mêmes résultats que la version simple illustrée aux figures 1 et 2.

On notera enfin que le plateau 3 peut être équipé de tout type d'organe de préhension 8 utile pour un mode de préhension souhaité des récipients. Dans l'exemple plus spécifiquement représenté, les récipients sont supposés posséder un col muni à sa base d'une collerette large, et les pinces 8 équipant le plateau 3, ainsi que les échancrures 20, 23 équipant les roues de transfert d'alimentation 17 et d'évacuation 22, sont plus particulièrement agencées pour saisir et soutenir de tels récipients 2 sous leur collerette. Les mêmes moyens, ainsi que l'ensemble du dispositif conviendraient de la même manière pour saisir des ébauches intermédiaires ou des récipients achevés à n'importe quel stade de leur traitement. Toutefois, les moyens de préhension pourraient être différents pour saisir des récipients de morphologie différente ou par une autre de leur partie, sans que cela remette en cause la conception d'ensemble du dispositif des figures 1 et 2.

Le dispositif élévateur/abaisseur conforme à l'invention offre l'intérêt essentiel d'une grande compacité pour la surface occupée au sol et d'éviter un développement linéaire important.

Un autre intérêt du dispositif conforme à l'invention est d'autoriser un regroupement des postes de traitement des récipients 2, en superposant lesdits postes qui sont alors desservis par le dispositif conforme à l'invention : la surface occupée au sol est considérablement réduite alors que l'espace vertical, souvent important dans un atelier, est occupé de façon amélioré.

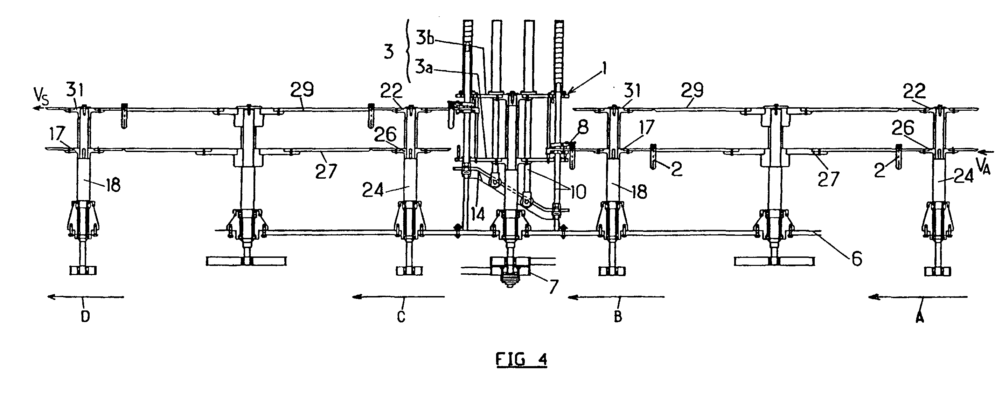

Les figures 3 et 4 illustrent un exemple de réalisation d'un tel agencement, qui est dérivé étroitement de la structure de base illustrée aux figures 1 et 2. De ce fait, certaines références numériques sont conservées, sur les figures 3 et 4, pour désigner les parties ou organes identiques.

On notera au préalable que, le dispositif incluant des roues et plateaux superposés verticalement et coaxiaux, des arrachements ont été pratiqués dans certaines pièces de manière à monter une partie des pièces sousjacentes (figure 3). De plus, la figure 4 est une vue de côté développée, du point de vue fonctionnel, du dispositif vu en plan sur la figure 3 : certains organes y apparaissent donc deux fois, respectivement dans deux attitudes fonctionnelles différentes.

Une vis sans fin d'alimentation Va amène les récipients 2 à une roue de transfert 26 à encoches (flèche A) qui les délivre sur un plateau tournant 27 à l'entrée E d'une unité de traitement quelconque 28 disposée en arc de cercle autour du plateau 27. A la sortie S de l'unité de traitement 28, les récipients (ici des préformes) 2 sont saisis par la roue de transfert d'alimentation 17, située au même niveau que la roue de transfert précitée 26, qui alimente (flèche B) les moyens de préhension 8 du dispositif élévateur 1 qui, par ailleurs, est organisé comme expliqué plus haut en regard des figures 1 et 2.

Au cours de la rotation du plateau 3, les organes de préhension 8 soutenus par les tiges 10 en appui sur la came 14 sont élevés, puis les préformes sont saisies par la roue de transfert d'évacuation 22 (non représentée à la figure 3) qui est située au-dessus de la roue de transfert d'entrée 26 et qui est calée sur le même axe que celle-ci.

La roue de transfert 22 délivre alors (flèche C) les préformes à un plateau tournant 29, coaxial au plateau tournant 27 et situé au-dessus de celui-ci, à l'entrée d'une seconde unité de traitement 30 qui s'étend en arc de cercle autour du plateau 29 et au-dessus de l'unité 28 précitée.

A la sortie de l'unité de traitement 30, les préformes sont saisies par une roue de transfert 31 d'axe 18 (non montrée à la fig. 3) et située au-dessus de la roue de transfert 17, puis amenées à une vis sans fin Vs les évacuant vers une sortie (flèche D).

Grâce à la superposition coaxiale des roues de transfert (26, 22 ; 17, 31), le dispositif des figures 3 et 4 possède une surface d'implantation au sol exactement identique à celle du dispositif plus simple illustré aux figures 1 et 2, tandis que le traitement des récipients s'effectue sur deux niveaux superposés (unité de traitement unique répartie sur deux niveaux, ou bien deux unités de traitements distincts disposées l'une au-dessus de l'autre).

On comprend dès lors l'ampleur du changement que le dispositif ascenseur/descenseur conforme à l'invention permet d'introduire dans l'architecture d'une installation de traitement des récipients. De façon pratique, aujourd'hui les différents postes se succèdent approximativement au niveau du sol dans un développement linéaire plus ou moins lové, et ce n'est que dans le cas des lignes de transfert, notamment pour le franchissement d'obstacles, qu'il était admis d'élever en hauteur le niveau de circulation des récipients. Grâce à la mise en oeuvre du dispositif de l'invention, ce sont les postes de traitement eux-mêmes qui s'étagent et se développent verticalement, conduisant à une occupation optimale de l'ensemble du volume d'un bâtiment avec un remarquable ramassage sur elle-même de l'installation au niveau du sol, conduisant à une économie substantielle de mètres carrés d'implantation.

On conçoit également, d'après ce qui a été décrit en regard des figures 3 et 4, que les dispositions conformes à l'invention ne sont pas limitées à la réalisation d'un dispositif de transfert sur deux niveaux et que les dispositions précédemment décrites peuvent être reconduites, d'étage en étage, pour constituer un dispositif de transfert vertical à nombre quelconque d'étages. Seuls sont à adapter la hauteur des tiges 10 de support des organes de préhension, ainsi que le nombre n desdits organes de préhension sur chaque tige 10.

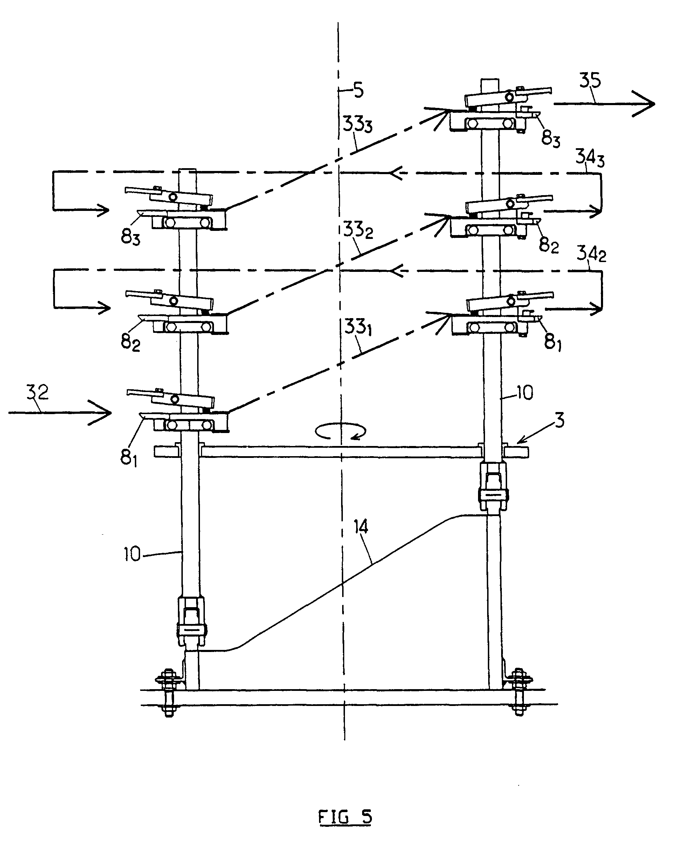

A la figure 5, on a représenté de façon très schématique, en conservant certaines références numériques de la figure 1, un dispositif à quadruple niveau d'élévation (le plateau 3 a été volontairement simplifié). Les récipients sont amenés par une roue de transfert (schématisée par la flèche 32), du côté du niveau bas de la came 14, à une première rangée inférieure d'organes de préhension 8₁ qui, par rotation du dispositif autour de l'axe 5, élèvent (flèche 33₁) les récipients à un deuxième niveau, en regard du niveau haut de la came 14. Là les récipients sont repris, par exemple par des roues de transfert, et amenés (flèche 34₂) du côté du niveau bas de la came 14, à une deuxième rangée d'organes de préhension 8₂. Ceux-ci élèvent (flèche 33₂) les récipients jusqu'à un troisième niveau en regard du niveau haut de la came 14. Des moyens de transfert amènent (flèche 34₃) les récipients à une troisième rangée d'organes de préhension 8₃ qui les élèvent (flèche 33₃) jusqu'à un niveau supérieur où ils sont évacués (flèche 35).

L'intérêt d'un tel dispositif réside dans le fait que l'accroissement des niveaux d'élévation des récipients se traduit uniquement par une augmentation de la hauteur des tiges 10 sur chacune desquelles les organes de préhension des rangées successives 8₁, 8₂, 8₃, ... sont fixés en étant équidistants les uns des autres et par un empilement vertical des n moyens d'amenée 32, de reprise des récipients (trajets 34₂, 34₃) et d'évacuation 35. L'encombrement au sol du dispositif demeure indépendant du nombre des étages et l'on comprend que ce nombre d'étages peut être quelconque : la hauteur d'élévation des récipients peut donc être choisie de toute valeur souhaitée.

On comprend également que les lignes de transfert horizontal à chaque niveau (flèche 34₂, 34₃) peuvent être des lignes ramenant les récipients directement sur le côté opposé du plateau 3 pour une nouvelle ascension, mais peuvent également consister en des lignes de transfert éloignant les récipients du dispositif élévateur, par exemple pour desservir des postes de traitement prévus à chaque étage, par exemple selon une architecture analogue à celle de la figure 3 ou bien différente de celle-ci (poste de traitement sur des niveaux différents, mais non rigoureusement superposés).

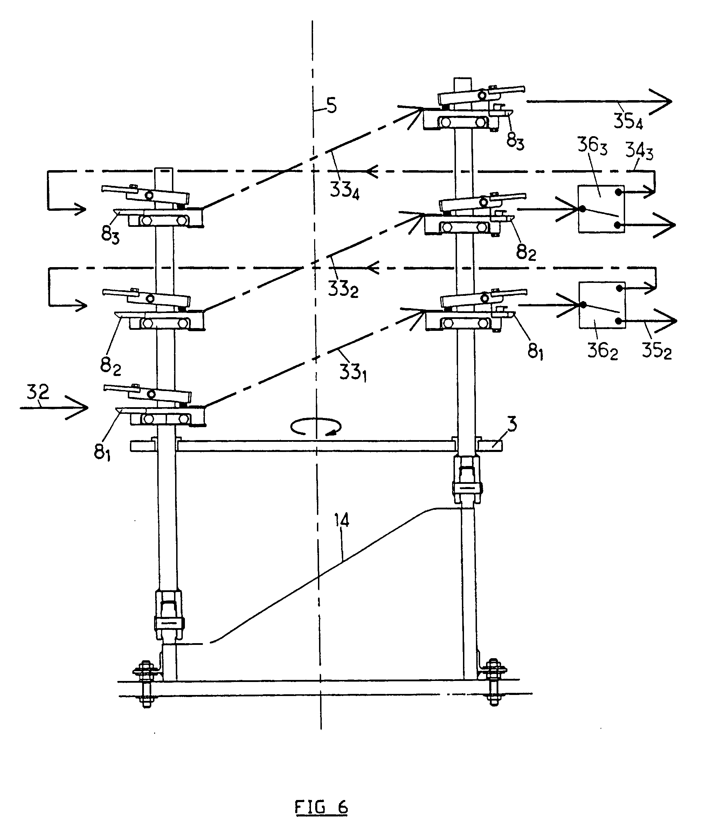

On peut également envisager de réaliser un dispositif à sorties multiples, comme illustré à la figure 6. Ce dispositif, agencé fondamentalement de façon analogue à celui de la figure 5, comporte, à chaque niveau intermédiaire, un aiguillage 36₂ au deuxième niveau, 36₃ au troisième niveau, qui permet sélectivement de faire sortir le récipient au niveau considéré (sortie 35₂, 35₃) ou de lui faire poursuivre son ascension jusqu'au niveau suivant, et finalement jusqu'à la sortie 35₄ du dispositif située ici au quatrième niveau.

Comme il va de soi et comme il résulte déjà de ce qui précède, l'invention ne se limite nullement à ceux de ses modes d'application et de réalisation qui ont été plus particulièrement envisagés ; elle en embrasse au contraire toutes les variantes.

## Revendications

1. Dispositif à étages multiples pour le transfert de récipients selon une direction sensiblement verticale, comprenant des moyens d'entraînement en rotation, autour d'un axe sensiblement vertical (5), d'une multiplicité d'organes (8) de préhension des récipients (2) qui sont répartis autour de l'axe vertical et qui sont propres, au cours de la rotation, à coopérer avec une came afin d'être déplacés sensiblement verticalement en entraînant les récipients respectifs,
**caractérisé en ce qu'**il comprend :
- une multiplicité de moyens (9) de support pour associer lesdits organes (8) de préhension aux moyens d'entraînement, agencés pour que chaque organe de préhension puisse coulisser sensiblement verticalement relativement aux moyens d'entraînement, chaque moyen de support (9) supportant plusieurs organes de préhension (8₁, 8₂, 8₃, ...) en nombre n, équidistants verticalement les uns des autres,
- ladite came fixe étant circulaire (14) et coaxiale aux moyens d'entraînement et disposée à l'aplomb desdits moyens de support (9) de manière que ceux-ci puissent coopérer avec elle, ladite came (14) présentant une hauteur variable circulairement entre un niveau vertical minimum et un niveau vertical maximum de manière à générer un déplacement vertical des moyens de support (9) lorsque les moyens d'entraînement tournent,
- n moyens d'alimentation (32 ; parties finales des trajets 34₂, 34₃, ...) disposés verticalement les uns au-dessus des autres et n moyens d'évacuation (parties initiales des trajets 34₂, 34₃, ... ; 35) disposés verticalement les uns au-dessus des autres avec la même équidistance que les organes de préhension,
- et en outre (n-1) moyens de transfert intermédiaires (parties intermédiaires des trajets (34₂, 34₃, ...) disposés verticalement les uns au-dessus des autres et agencés pour recueillir les récipients (2) du moyen d'évacuation d'un niveau et l'amener, par un transfert sensiblement horizontal (34₂, 34₃, ...) , au moyen d'alimentation en direction d'un niveau immédiatement adjacent - supérieur ou inférieur -,
ce grâce à quoi, pour une came (14) de hauteur donnée, il est possible de multiplier l'amplitude verticale de transfert des récipients.

2. Dispositif de transfert vertical à étages multiples selon la revendication 1, **caractérisé en ce qu'**à chaque étage des moyens sélecteurs (36₂, 36₃, ...) sont prévus pour prélever des récipients sur les moyens d'évacuation dudit niveau et les diriger vers une sortie correspondante (3b₂, 35₃, ...) ou sélectivement pour laisser les récipients être entraînés par la moyen de transfert intermédiaire (34₂, 34₃, ...) vers le moyen d'alimentation suivant.

3. Dispositif de transfert vertical à étages multiples selon la revendication 2, **caractérisé en ce que** chaque moyen de transfert intermédiaire dessert une unité ou fraction d'unité de traitement de récipients,
ce grâce à quoi les récipients sont déplacés à travers une succession d'unités de traitement disposées verticalement les unes au-dessus des autres, avec une implantation au sol de surface réduite.

4. Dispositif de transfert vertical selon l'une quelconque des revendications 1 à 3, **caractérisé en ce que** chaque moyen de support (9) comprend une tige de support (10) apte à coulisser sensiblement verticalement dans un palier (11) prévu sur la périphérie des moyens d'entrainement, cette tige de support (10) supportant au moins un organe de préhension (8) et coopérant (15) avec la came (14).

5. Dispositif de transfert vertical selon la revendication 4, **caractérisé en ce que** chaque moyen de support (9) est associé à des moyens de rappel pour maintenir élastiquement la tige (10) en appui contre la came (14).

6. Dispositif de transfert vertical selon la revendication 5, **caractérisé en ce que** les moyens de rappel sont un ressort.

7. Dispositif de transfert vertical selon la revendication 5, **caractérisé en ce que** les moyens de rappel sont une contre-came coopérant avec un galet porté par la tige.

8. Dispositif de transfert vertical selon l'une quelconque des revendications 4 à 7, **caractérisé en ce que** les moyens d'entraînement sont un plateau, la came (14) est située sous le plateau (3), les tiges (10) traversent le plateau (3), et les organes de préhension (8) sont situés au-dessus du plateau (3).

9. Dispositif de transfert vertical selon l'une quelconque des revendications 1 à 8, les récipients (2) étant munis d'un col définissant un goulot, **caractérisé en ce que** les organes de préhension (8) sont des pinces s'étendant sensiblement radialement par rapport à l'axe (5) des moyens d'entraînement (3) et aptes à saisir les récipients (2) par leur col.

10. Dispositif de transfert vertical selon l'une quelconque des revendications 1 à 9, **caractérisé en ce que** les moyens d'alimentation à l'entrée du dispositif (32) et les moyens d'évacuation à la sortie du dispositif (35) comprennent chacun une roue de transfert (17 ; 22) comportant un disque muni d'évidements périphériques (20 ; 23) pour supporter les récipients (2) par leur col et les présenter un à un aux moyens de préhension (8₁) ou respectivement les saisir un à un sur lesdits moyens de préhension (8₃).

11. Dispositif de transfert vertical selon la revendication 10, **caractérisé en ce que** les moyens d'alimentation comprennent une vis d'alimentation (19) associée à la roue de transfert d'alimentation (17) pour amener à celle-ci les récipients (2) distants d'un pas prédéterminé et/ou **en ce que** les moyens d'évacuation comprennent une vis sans fin d'évacuation (25) associée à la roue de transfert d'évacuation (22) pour recueillir les récipients (22) sur celle-ci.

## Patentansprüche

1. Mehrstöckige Vorrichtung zum Transport von Gefäßen in einer im wesentlichen senkrechten Richtung, die Antriebsmittel zum Drehen um eine im wesentlichen senkrechte Achse (5) einer Vielheit von Greiforganen (8) der Gefäße (2) enthält, die um die senkrechte Achse verteilt sind und die geeignet sind, im Verlaufe der Drehung mit einem Nocken zusammenzuwirken, um im wesentlichen senkrecht verschoben zu werden, wobei die betreffenden Gefäße mitgeführt werden, **dadurch gekennzeichnet, daß** sie umfaßt:
- eine Vielheit von Tragemitteln (9), um die Greiforgane (8) mit den Antriebsmitteln in Verbindung zu bringen, die so eingerichtet sind, daß jedes Greiforgan sich im wesentlichen senkrecht in bezug auf die Antriebsmittel verschieben läßt, wobei jedes Tragemittel (9) mehrere Greiforgane (8₁, 8₂, 8₃, ...) der Anzahl n trägt, die vertikal zueinander gleiche Abstände aufweisen,
- wobei der feste Nocken (14) kreisförmig und koaxial zu den Antriebsmitteln ist und lotrecht zu den Tragemitteln (9) in der Weise angeordnet ist, daß dieselben mit ihr zusammenwirken können, wobei der Nocken (14) eine zwischen einer minimalen Vertikalhöhe und einer maximalen Vertikalhöhe im Kreis veränderliche Höhe aufweist, um eine Vertikalverschiebung der Tragemittel (9) zu erzeugen, wenn sich die Antriebsmittel drehen,
- n Zuführungsmittel (32; Endteile der Strecken 34₂, 34₃, ...), die senkrecht übereinander angeordnet sind, und n Entleerungsmittel (Anfangsteile der Strecken 34₂, 34₃, ...; 35), die senkrecht übereinander angeordnet sind mit dem gleichen einheitlichen Abstand wie die Greiforgane,
- und außerdem (n-1) Transportzwischenmittel (Zwischenteile der Strecken 34₂, 34₃, ...), die vertikal übereinander angeordnet und eingerichtet sind, um die Gefäße (2) des Entleerungsmittels einer Höhe einzusammeln und es durch einen im wesentlichen waagrechten Transport (34₂, 34₃, ...) zum Zuführungsmittel in Richtung einer unmittelbar angrenzenden Höhe darüber oder darunter zu bringen,
dies auf Grund dessen, daß es für einen Nocken (14) von gegebener Höhe möglich ist, die vertikale Transportamplitude der Gefäße zu vervielfachen.

2. Vorrichtung zum mehrstöckigen vertikalen Transport nach Anspruch 1, **dadurch gekennzeichnet, daß** in jedem Stock Auswählmittel (36₂, 36₃, ...) vorgesehen sind, um die Gefäße an den Entleerungsmitteln der Höhe abzunehmen und sie einem entsprechenden Austritt (35₂, 35₃, ...) zuzuleiten oder wahlweise um die Gefäße über das Transportzwischenmittel (34₂, 34₃, ...) zum folgenden Zuführungsmittel hin mitführen zu lassen.

3. Vorrichtung zum mehrstöckigen vertikalen Transport nach Anspruch 2, **dadurch gekennzeichnet, daß** jedes Transportzwischenmittel eine Einheit zum Behandeln von Gefäßen oder einen Anteil der Einheit bedient, dies auf Grund dessen, daß die Gefäße quer durch eine Folge von Behandlungseinheiten verschoben werden, die vertikal übereinander angeordnet sind bei einer Anbringung am Boden von reduzierter Oberfläche.

4. Vorrichtung zum vertikalen Transport nach einem der Ansprüche 1 bis 3, **dadurch gekennzeichnet, daß** jedes Tragemittel (9) eine Tragestange (10) umfaßt, die geeignet ist, sich im wesentlichen vertikal in einem Lager (11) zu verschieben, das am Rand der Antriebsmittel vorgesehen ist, wobei diese Tragestange (10) wenigstens ein Greiforgan (8) trägt und mit dem Nocken (14) zusammenwirkt (15).

5. Vorrichtung zum vertikalen Transport nach Anspruch 4, **dadurch gekennzeichnet, daß** jedes Tragemittel (9) mit Rückstellmitteln in Verbindung steht, um die Stange (10) unter Abstützung gegen den Nocken (14) elastisch zu halten.

6. Vorrichtung zum vertikalen Transport nach Anspruch 5, **dadurch gekennzeichnet, daß** die Rückstellmittel eine Feder sind.

7. Vorrichtung zum vertikalen Transport nach Anspruch 5, **dadurch gekennzeichnet, daß** die Rückstellmittel ein Gegennocken sind, der mit einer durch die Stange getragenen Rolle zusammenwirkt.

8. Vorrichtung zum vertikalen Transport nach einem der Ansprüche 4 bis 7, **dadurch gekennzeichnet, daß** die Antriebsmittel eine Platte sind, der Nocken (14) unter der Platte (3) liegt, die Stangen (10) die Platte (3) durchlaufen und die Greiforgane (8) oberhalb der Platte (3) liegen.

9. Vorrichtung zum vertikalen Transport nach einem der Ansprüche 1 bis 8, wobei die Gefäße (2) mit einer einen Hals festlegenden Einsattelung versehen sind, **dadurch gekennzeichnet, daß** die Greiforgane (8) Zangen sind, die sich im wesentlichen radial in bezug auf die Achse (5) der Antriebsmittel (3) erstrecken und dazu geeignet sind, die Gefäße (2) an ihrem Hals zu fassen.

10. Vorrichtung zum vertikalen Transport nach einem der Ansprüche 1 bis 9, **dadurch gekennzeichnet, daß** die Zuführungsmittel am Eintritt der Vorrichtung (32) und die Entleerungsmittel am Austritt der Vorrichtung (35) jeweils ein Transportrad (17; 22) umfassen, das eine Scheibe enthält, die mit Randaussparungen (20; 23) versehen ist, um die Gefäße (2) an ihrem Hals zu tragen und sie einzeln den Greiforganen (8₁) darzureichen bzw. sie einzeln an den Greiforganen (8₃) zu fassen.

11. Vorrichtung zum vertikalen Transport nach Anspruch 10, **dadurch gekennzeichnet, daß** die Zuführungsmittel eine Zuführungsschnecke (19) umfassen, die mit dem Zuführungstransportrad (17) in Verbindung steht, um diesem die entfernten Gefäße (2) eines vorher festgelegten Schrittes zu bringen, und/oder daß die Entleerungsmittel eine Entleerungsschnecke (25) umfassen, die mit dem Entleerungstransportrad (22) in Verbindung steht, um die Gefäße (2) über dieses einzusammeln.

## Claims

1. A multi-tier system for the transfer of containers in a substantially vertical direction, comprising means for driving in rotation about a substantially vertical axis (5) a plurality of elements (8) for gripping the containers (2), which elements are distributed around the vertical axis and which are adapted, during rotation, to co-operate with a cam so as to be moved substantially vertically while driving the respective containers, **characterised in that** it comprises:
- a plurality of support means (9) for associating the said gripper elements (8) with the drive means, arranged so that each gripper element can slide substantially vertically relatively to the drive means, each support means (9) supporting a plurality of gripper means (8₁, 8₂, 8₃, ...) of number n, vertically equidistant from one another,
- the said fixed cam being circular (14) and coaxial with the drive means and disposed level with the said support means (9) so that the latter can co-operate therewith, the said cam (14) having a height variable circularly between a minimum vertical level and a maximum vertical level so as to generate a vertical movement of the support means (9) when the drive means rotate,
- n supply means (32; final parts of the paths 34₂, 34₃, ...) disposed vertically one above the other and n discharge means (initial parts of the paths 34₂, 34₃, ...; 35) disposed vertically above one another with the same equidistance as the gripper elements,
- and also (n-1) intermediate transfer means (intermediate parts of the paths (34₂, 34₃, ...) disposed vertically above one another and arranged to collect the containers (2) from the discharge means from one level and feed it by a substantially horizontal transfer (34₂, 34₃, ...) to the supply means in the direction of an immediately adjacent - upper or lower - level,
whereby, for a cam (14) of given height, it is possible to multiply the vertical amplitude of the container transfer.

2. A multi-tier vertical transfer system according to claim 1, **characterised in that** selector means (36₂, 36₃, ...) are provided at each tier to take containers from the discharge means at the said level and direct them to a corresponding outlet (35₂, 35₃, ...) or selectively to have the containers driven by the intermediate transfer means (34₂, 34₃, ...) to the next supply means.

3. A multi-tier vertical transfer system according to claim 2, **characterised in that** each intermediate transfer means serves a container treatment unit or unit fraction,
whereby the containers are moved through a succession of treatment units disposed vertically above one another with a reduced area ground footprint.

4. A vertical transfer system according to any one of claims 1 to 3, **characterised in that** each support means (9) comprises a support rod (10) adapted to slide substantially vertically in a bearing (11) provided on the periphery of the drive means, said support rod (10) supporting at least one gripper element (8) and co-operating (15) with the cam (14).

5. A vertical transfer system according to claim 4, **characterised in that** each support means (9) is associated with return means for holding the rod (10) elastically in abutment against the cam (14).

6. A vertical transfer system according to claim 5, **characterised in that** the return means are a spring.

7. A vertical transfer system according to claim 5, **characterised in that** the return means are a counter-cam co-operating with a roller carried by the rod.

8. A vertical transfer system according to any one of claims 4 to 7, **characterised in that** the drive means are a plate, the cam (14) is situated beneath the plate (3), the rods (10) extend through the plate (3) and the gripper elements (8) are situated above the plate (3).

9. A vertical transfer system according to any one of claims 1 to 8, the containers (2) being provided with a neck which defines a bottleneck, **characterised in that** the gripper elements (8) are tongs extending substantially radially with respect to the axis (5) of the drive means (3) and adapted to grip the containers (2) by their neck.

10. A vertical transfer system according to any one of claims 1 to 9, **characterised in that** the supply means at the inlet of the device (32) and the discharge means at the outlet of the device (35) each comprise a transfer wheel (17; 22) comprising a disc provided with peripheral recesses (20; 23) to support the containers (2) by their neck and present them one by one to the gripper means (8₁) or respectively take them one by one from the said gripper means (8₃).

11. A vertical transfer system according to claim 10, **characterised in that** the supply means comprise a feed screw (19) associated with the feed transfer wheel (17) to bring thereto the containers (2) which are spaced by a predetermined pitch and/or **in that** the discharge means comprise an endless discharge screw (25) associated with the discharge transfer wheel (22) to collect the containers (22) therefrom.
